# EUROPEAN PATENT SPECIFICATION

(11) **EP 0 993 857 B1**
(45) Date of publication and mention of the grant of the patent: **07.04.2004**
(21) Application number: 99308115.7
(22) Date of filing: 14.10.1999
(51) Int. Cl.: B01D 53/86

(54) **Method for the catalytic oxidation of VOC/CO in the presence of organosilicate compounds**
Verfahren zur katalytischen Oxidation flüchtiger organischer Verbindungen und Kohlenmonoxid in Gegenwart von Organosilikatverbindungen
Procédé pour l'oxydation catalytique de composants organiques volatiles et monoxyde de carbone en présence de composants organosiliciés

(30) Priority: 16.10.1998 US 173893
(43) Date of publication of application: 19.04.2000
(73) Proprietor: ENGELHARD CORPORATION, Iselin, New Jersey 08830-0770 (US)
(72) Inventor: Nguyen, Pascaline H., Holmdel, New Jersey 07733 (US); Chen, James M., Edison, New Jersey 08820 (US); Lapadula, Gerard D., Piscataway, New Jersey 08854-2443 (US); Furbeck, Howard J., Hamilton, New Jersey 08690 (US)
(74) Representative: Fisher, Adrian John

(56) References cited:
- EP-A- 0 437 901
- WO-A-97/10891
- US-A- 5 141 912
- US-A- 5 780 384

## Description

### BACKGROUND OF THE INVENTION

### Field of the Invention

This invention relates to a method for the catalytic oxidation of gaseous carbonaceous emissions, in particular, gaseous carbonaceous emissions such as volatile organic compounds (VOCs) in the presence of organosilicate compounds.

### Description of Related Art

The treatment of gaseous emissions containing volatile organic compounds has been of increasing concern in recent years. Thermal incineration, catalytic oxidation and adsorption are commonly used for removing these pollutants. Thermal incineration requires high operating temperatures and high capital cost facilities. If the gaseous stream also includes halogenated compounds, thermal incineration can evolve toxic halogenated compounds under certain operating conditions. In some instances, adsorption by adsorbents such as carbon is an alternative; however, this process does not destroy the pollutants, but merely concentrates them. Furthermore, adsorption efficiency can be adversely impacted by fluctuating concentrations of the gaseous components.

Catalytic oxidation is an energy efficient and economical way of destroying gaseous organic emissions. It operates at significantly lower temperatures and shorter residence time than thermal incineration and requires smaller reactors made of less expensive materials.

Methods for the catalytic oxidation of organic compounds are well known in the art. The article by James J. Spivy, "Complete Catalytic Oxidation of Volatile Organics", Ind. Eng. Chem. Res., 1987, 26, 2165-2180, is a review of the literature dealing with the heterogenous catalytic oxidation of volatile organic compounds.

However, when gaseous emissions contain contaminants, activity of catalysts is not always predictable.

The article by S. Vigneron, P. Deprelle, and J. Hermia, "Comparison of precious metals and base metal oxides by catalytic deep oxidation of volatile organic compounds from coating plants: test results on an industrial pilot scale incinerator" Catalysis Today (1996) 27, 229-236, reports that base metal oxide catalysts (Cu/Cr, Cu/W or Cu/Mn) are not any more resistant to poisoning than precious group metal catalysts.

US A 5,780,384 discloses a method for reducing the amount of VOC's, particularly oxygen containing VOC's, in a waste gas stream by contact with a catalyst comprising an alumina supported mono charged cation delta manganese dioxide hydrate having a noble metal on its surface.

The present invention provides an advance in the art of treatment of VOC's in the presence of organosilicate compounds by offering methods which are more resistant to organosilicate poisoning.

### SUMMARY OF THE INVENTION

The present invention is related to a catalytic method useful for treating gas streams containing carbonaceous compounds in the presence of organosilicate compounds.

The method of the present invention relates to oxidizing the carbonaceous compounds, volatile organic compounds (VOC's) and/or carbon monoxide (CO), in the presence of organosilicate compounds comprising the steps of:
(a) providing a gas stream comprising the carbonaceous compounds and organosilicate compounds; and
(b) contacting the gas stream with a catalytic effective amount of a composition comprising a base metal oxide and precious metal, or a precious metal combination, supported on or within a substrate comprising no less than approximately 60 weight percent of alumina.

The use of the catalytic compositions of this invention has been found to surprisingly maintain high percentages of VOC conversion in the presence of organosilicate compounds compared to catalysts of similar composition.

### BRIEF DESCRIPTION OF THE DRAWINGS

Figure 1 shows a comparative of methyl ethyl ketone (MEK) conversion for various catalysts after contamination with hexamethyldisiloxane.
Figure 2 shows a comparative of toluene conversion for various catalysts after contamination with hexamethyldisiloxane.

### DESCRIPTION OF THE PREFERRED EMBODIMENTS

This invention relates to a catalytic method for treating gas streams containing at least one carbonaceous compound comprising compounds selected from VOC's and/or carbon monoxide in the presence of an organosilicate compound. Inorganic gaseous constituents such as nitrogen and minor constituents of air may also be present.

Non-halogenated organic compounds include carbon-containing molecules such as aliphatic and cyclic molecules. Such compounds can include hydrocarbon molecules, as well as heteromolecules which contain both carbon and non-carbon atoms.

For the purpose of the present invention, volatile organic compounds (VOC's) are organic compounds with sufficiently high vapor pressure to exist as a vapor in ambient air and which react in the atmosphere with nitrogen oxides in the presence of heat and sunlight to form ozone, and include both halogenated and non-halogenated volatile organic compounds.

In accordance with the present invention, at least some of the organic compounds and/or carbon monoxide contained in the introduced gas stream are converted in the presence of oxygen to comparatively innocuous compounds, such as CO₂ and H₂O using the method of the invention. Preferably, at least 60% based on initial concentrations and more preferably substantially all of the organic compounds are converted.

The catalysts used in the present invention were found to be more effective in oxidizing carbonaceous compounds in the presence of organosilicate poisons. These catalysts comprise a catalytic effective amount of base metal oxide and precious metal or precious metal combination supported on or within an alumina containing substrate. Typical of organosilicates that have been found or are known to poison catalytic activity include silane, siloxanes, silazanes, silicon oils and silicones.

Examples of useful base metal oxides include oxides of copper, nickel, cobalt, vanadia, titania, manganese, iron, and rhenium. A preferred metal oxide is manganese oxide.

Suitable precious metals include platinum group metals. Examples of the platinum group metals include platinum, palladium, rhodium, iridium, ruthenium, and osmium. Preferred precious metals are platinum and palladium.

Typical surface areas of the alumina support comprise at least 10 m²/g, typically from 10 to 190 m²/g, more typically from 20 to 150 m²/g.

Preferred support materials comprise at least 65 weight percent alumina, preferably an amount in the range of 65 to 90, more preferably an amount in the range of 80 to 90 percent alumina. Constituents of the remaining fraction of the support may predominately contain silica with up to about 0.5 weight percent each of calcium oxide magnesium oxide, potassium oxide, or sodium oxide. In the case of bauxite, other constituents including oxides of iron and titanium in addition to silica may comprise about 10 weight percent of the bauxite.

The alumina may be "stabilized" or "promoted" with alkaline earth and rare earth metal oxides. The term "stabilized" or "promoted" is intended to describe materials which are known to improve the thermal durability of the catalytic layer without adversely affecting the structure or activity of the catalyzed and stabilized support material. Particularly useful stabilizers are ceria, and alkaline and rare earth metal oxides of calcium, barium, strontium, lanthanum, praseodymium or neodymium, and their combinations. Preferred stabilizers are ceria and oxides of barium, strontium, lanthanum, neodymium, and their mixtures.

Typical amounts of the constituents comprising catalysts useful in this invention range from the following: for the base metal oxide from about 1 to 50 weight percent of the catalyst; for the precious metal from about 0.001 to 0.100 weight percent of the catalyst; for the alumina from 60 to 90 weight percent of the catalyst. As shown in the following examples, excellent results have been achieved when the base metal oxide ranges from 5 to 20 weight percent of the catalyst, platinum ranges from about 0.004 to 0.03 weight percent of the catalyst; palladium ranges from about 0.008 to 0.06 weight percent of the catalyst (when present); and from about 80 to 90 weight alumina.

The preparation of the support materials for the catalysts of this invention may be by means well known to those of ordinary skill in the art and include physical mixtures, coagulation, coprecipitation or impregnation. The techniques for preparing the materials by coagulation and coprecipitation may be found, for example, in U.S. Patent 4,085,193. Typically support materials prepared by the methods described are in the form of a fine powder. The support material can be used in powdered form. Alternatively, the support material in powdered form can be subsequently formed into larger particles and particulate shapes. The catalytic material may be applied to the support material prior to forming the support material into a particulate shape, or alternatively after the support is shaped into particulate form. The support material may be shaped into particulate or pellet form, such as extrudates, spheres and tablets, using methods well known in the art. For example, catalyzed support powder can be combined with a binder such as a clay and rolled in a disk pelletizing apparatus to give catalyst spheres. The amount of binder can vary considerably but for convenience is present from about 10 to about 30 weight percent.

The catalytic material can be dispersed onto the support materials by means well known in the art. A preferred method is impregnation, wherein the support material in particulate or powder form is impregnated with a solution containing a soluble compound of the catalytic metal or metals. The solution may be an aqueous solution, one using an organic solvent, or a mixture of the two. An aqueous solution is preferred. The soluble compounds of the metal (or metals) should decompose to the metal or metal oxide upon heating in air at elevated temperatures.

Suitable soluble platinum compounds are chloroplatinic acid, ammonium chloroplatinate, bromoplatinic acid, platinum tetrachloride hydrate, platinum dichlorocarbonyl dichloride, dinitrodiamino platinum, amine solubilized platinum hydroxide. Examples of suitable soluble palladium compounds are chloropalladic acid, palladium chloride, palladium nitrate, diaminepalladium hydroxide, tetraamminepalladium chloride, and palladium tetraamine diacetate.

One convenient method of impregnation is to place the uncatalyzed support material in the form of granules into a rotary evaporator which is partially immersed in a heating bath. The impregnating solution which contains an amount of the desired metal compound to provide the desired concentration of metal oxide or metal in the finished catalyst is now added to the support material and the mixture is cold rolled (no heat) for a time from about 10 to 60 minutes. Next, heat is applied and the solvent is evaporated. This usually takes from about 1 to about 4 hours. Finally, the solid is removed from the rotary evaporator and calcined in air at a temperature of about 400°C-600°C for about 1 to 3 hours. If more than one catalytic metal is desired, they may be impregnated simultaneously or sequentially in any order.

Alternatively, the support material in powder form is placed into a planetary mixer and the impregnating solution is added under continuous agitation until a state of incipient wetness is achieved as known in the art of catalyst preparation. The powder is then dried in an oven for 4-8 hours and calcined from about 400°C-600°C for 1-3 hours.

The catalyst employed in the instant invention may be used in any configuration, shape or size which exposes it to the gas to be treated. For example, the supported catalyst can be conveniently employed in particulate form or the supported catalyst can be deposited as a coating onto a solid monolithic substrate. In some applications when the particulate form is used it is desirable to provide a screen-like barrier that permits the flow of the gas stream but inhibits the movement of the solid particulates from one catalyst bed to the other.

Suitable shapes include, for example, saddles, rings, and hexalobes. It should be appreciated by one skilled in the art that the particular shape of the catalyst would be selected based mainly for physical parameters such as desired pressure drop and would not be expected to have an effect on the chemical or catalytic conversion rate.

In circumstances in which less mass is desirable or in which movement or agitation of particles of catalyst may result in attrition, dusting and resulting loss of dispersed metals, or undue increase in pressure drop across the particles due to high gas flows, a monolithic substrate is preferred. In the employment of a monolithic substrate, it is usually most convenient to employ the supported catalyst as a thin film or coating deposited on the inert substrate material which thereby provides the structural support for the catalyst. The inert substrate material can be any refractory material such as ceramic or metallic materials. It is desirable that the substrate material be unreactive with the catalyst and not be degraded by the gas to which it is exposed. Examples of suitable ceramic materials include sillimanite, petalite, cordierite, mullite, zircon, zircon mullite, spodumene, alumina-titanate, etc. Additionally, metallic materials which are within the scope of this invention include metals and alloys as disclosed in U.S. Patent No. 3,920,583 which are oxidation resistant and are otherwise capable of withstanding high temperatures. For the treatment of gases containing halogenated organics, ceramic materials are preferred.

The monolithic substrate can best be utilized in any rigid unitary configuration which provides a plurality of pores or channels extending in the direction of gas flow. It is preferred that the configuration be a honeycomb configuration. The honeycomb structure can be used advantageously in either unitary form, or as an arrangement of multiple modules. The honeycomb structure is usually oriented such that gas flow is generally in the same direction as the cells or channels of the honeycomb structure. For a more detailed discussion of monolithic structures, refer to U.S. Patent 3,785,998 and U.S. Patent 3,767,453. In a preferred embodiment, the honeycomb substrate has about 7.75 to about 93.0 cells per square centimetre (about 50 to about 600 cells per square inch) of cross-sectional area. In an especially preferred embodiment, the honeycomb has about 15.5 to about 62.0 cells per square centimetre (about 100 to about 400 cells per square inch).

It is also within the scope of the invention that the monolith substrate consists of a crossflow-type monolith having a first plurality of passages defining a first flow path through the monolith and a second plurality of passages defining a second flow path through the monolith, segregated from the first flow path. The first and second catalyst beds of the dual bed design of this invention may be disposed in the respective first and second flow paths of the crossflow monolith.

If a monolithic form is desired, each layer of catalyst employed in this invention can be deposited sequentially onto the monolithic honeycomb carrier by conventional means. For example, a slurry can be prepared by means known in the art such as combining the appropriate amounts of the supported catalyst employed in this invention in powder form, with water. The resultant slurry is typically ball-milled for about 8 to 18 hours to form a usable slurry. Other types of mills such as impact mills can be used to reduce the milling time to about 1-4 hours. The slurry is then applied as a thin film or coating onto the monolithic carrier by means well known in the art. Optionally, an adhesion aid such as alumina, silica, zirconium silicate, aluminum silicates or zirconium acetate can be added in the form of an aqueous slurry or solution. A common method involves dipping the monolithic carrier into said slurry, blowing out the excess slurry, drying and calcining in air at a temperature of about 450°C to about 600°C for about 1 to about 4 hours. This procedure can be repeated until the desired amount of catalyst for use in this invention is deposited on said monolithic honeycomb substrate. It is desirable that each layer of the supported catalyst of this invention be present on the monolithic carrier in an amount in the range of about 0.061-0.24 grams of supported catalyst per cm³ (about 1-4 grams of supported catalyst per in³) of carrier volume and preferably from about 0.091-0.18 grams/cm³ (about 1.5 - 3 grams/in³).

An alternative method of preparation is to disperse the catalytic metal or metals and such other optional components on a monolithic substrate carrier which previously has been coated with only uncatalyzed support material by the above procedure. The compounds of catalytic metal which can be used and the methods of dispersion are the same as described above. After one or more of these compounds have been dispersed onto the support material coated substrate, the coated substrate is dried and calcined at a temperature of about 400°C to about 600°C for a time of about 1 to 6 hours. If other components are desired, they may be impregnated simultaneously or individually in any order.

The process of this invention comprises contacting the gas stream at a temperature of about 100°C to about 650°C and preferably at a temperature of about 150°C to about 450°C.

The process of this invention may also effectively treat carbon monoxide contained in the introduced gas stream. The gas stream may consist essentially of carbon monoxide as the sole carbonaceous compound or the CO may be present as a component in a gas stream also comprising other carbonaceous compounds and/or halogen compounds in the presence of organosilicate compounds.

### EXAMPLES

Various embodiments of the invention are described herein. The description and examples are not intended as limiting, as modifications will be apparent to those skilled in the art.

### Heterogeneous RCO Catalyst: Preparation

The various types of heterogeneous catalyst were prepared using a one step impregnation procedure in which an extrudate comprised predominantly of aluminum oxide and silicon dioxide was impregnated with a solution containing the desired amount of precious metal source, base metal oxide source, or combination thereof. For solutions containing more than one source of desired metal or metal oxide, the selected sources were chosen based on their compatibility with one another, i.e., sources with similar pH in order to prevent precipitation prior to impregnation. The impregnated extrudate was then dried at 110°C for 2 to 5 hours in a box furnace to remove moisture, followed by a calcination at 500° to 550°C for 1 to 3 hours. The calcination step is required to convert the precious metal and/or base metal oxide sources into the appropriate metal or base metal oxide form.

### Saddle Extrudates

The extrudate used as the catalyst saddle support is composed of approximately 65% by weight aluminum oxide and 35% by weight silicon dioxide. This 2.54 cm (1") average length saddle shaped extrudate has a B.E.T. surface area of between 10 and 20 m²/g and a water absorption of 20 to 25 wt. % of the extrudate. The extrudate may include up to 0.5 wt. % each of calcium oxide, magnesium oxide, potassium oxide, or sodium oxide.

### Pt Saddle (Comparative example)

For the platinum only saddle catalyst, 1000 grams of saddle extrudate was impregnated with an amine stabilized platinum hydroxide solution diluted to 200 grams with deionized water to give a catalyst comprised of 347 parts per million platinum metal after calcination. The amount of amine stabilized platinum hydroxide solution utilized is dependent upon its platinum concentration, which varies between 15 to 20 wt. % calculated as platinum metal.

### Pd Saddle (Comparative Example)

For the palladium only saddle catalyst, 1000 grams of saddle extrudate was impregnated with a palladium tetraamine diacetate solution diluted to 200 grams with deionized water to give a catalyst comprised of 347 ppm palladium metal after calcination. The amount of palladium tetraamine diacetate solution utilized is dependent upon its palladium concentration, which varies between 10 to 15 wt. % calculated as palladium metal.

### Pt/Pd Saddle (Comparative Example)

For the platinum/palladium saddle catalyst, 1000 grams of saddle extrudate was impregnated with a mixture of an amine stabilized platinum hydroxide solution and a palladium tetraamine diacetate solution diluted to 200 grams with deionized water to give a catalyst comprised of 174 ppm platinum metal and 347 ppm palladium metal after calcination.

### Pt/Mn Saddle

For the platinum/manganese saddle catalyst, 1000 grams of saddle extrudate was impregnated with a hexachloroplatinic acid solution diluted to 250 grams with a manganese (II) nitrate solution to give a catalyst comprised of 347 ppm platinum metal and approximately 4.7 to 5.3 wt. % manganese oxide calculated as manganese (III) oxide. The concentration of manganese oxide present in the manganese (II) nitrate solution varies between 20 and 22 wt. % calculated as manganese (III) oxide. In this case, the percentage of alumina present in the catalyst ranged approximately from (1-0.047)(65) = 61.9 % to (1-0.053)(65) = 61.6 %, i.e., approximately 60 weight percent alumina.

### Mn Saddle (Comparative Example)

For the manganese only saddle catalyst, 1000 grams of saddle extrudate was impregnated with 250 grams of manganese (II) nitrate solution to give a catalyst comprised of approximately 4.7 to 5.3 wt. % manganese oxide calculated as manganese (III) oxide. In this case, as in the Pt/Mn Saddle example, the alumina present in the catalyst is approximately 60 weight percent.

### Mn/Al Ring (Comparative Example)

The manganese/alumina ring catalyst is a homogeneous extrudate composed of 10 to 20 wt. % manganese oxide calculated as manganese (III) oxide and 80 to 90 wt. % aluminum oxide. This 1.59 cm (⅝") in length ring type extrudate has an outer diameter of 1.59 cm (⅝"), an inner diameter of 0.95 cm (⅜"), and a B.E.T. surface area of between 15 and 30 m²/g. This homogeneous material was tested as is for VOC oxidation efficiency.

### Pt/Pd Hexalobe (Comparative Example)

The platinum/palladium hexalobe catalyst is an impregnated extrudate catalyst. The extrudate is composed of 95-99 percent weight percent bauxite, which in itself is comprised of approximately 89.0 weight percent Al₂O₃, 2.0 weight percent, Fe₂O₃, 2.8 weight percent, TiO₂, and 6.2 weight percent SiO₂. Thus, this catalyst was comprised of approximately 0.95(89) = 84.6 to 0.99(89) = 88 weight percent of alumina. A mixture of an amine stabilized platinum hydroxide solution and a palladium tetraamine diacetate solution diluted to 200 grams with deionized water was impregnated onto 1000 grams of extrudate to give a catalyst comprised of 174 ppm platinum metal and 347 ppm palladium metal after calcination.

A summary of the base metal oxides and precious metals used in the foregoing catalysts is provided in Table 1.

**TABLE 1**

| **Base Metal Oxide and Precious Metal Component Ranges** | | | | |
|---|---|---|---|---|
| **Catalyst** | **Active Component** | **Bulk Density kg/m**^{**3**} **(kg/ft**^{**3**}**)** | **% Active Component nominal** | **% Active Component, range** |
| | | | | |
| Pt Saddle | Pt | 609 (17.27) | 0.0347 | 0.0116-0.0579 |
| | | | | |
| Pd Saddle | Pd | 609 (17.27) | 0.0521 | 0.0174-0.0868 |
| | | | | |
| Pt/Pd Saddle | Pt | 609 (17.27) | 0.0174 | 0.0058-0.0289 |
| | Pd | | 0.0347 | 0.01 16-0.0579 |
| | | | | |
| Pt/Mn Saddle | Pt | 609 (17.27) | 0.0347 | 0.0116-0.0579 |
| | Mn(III) oxide | | 5.0 | 4.7-5.3 |
| | | | | |
| Mn Saddle | Mn (III) oxide | 609 (17.27) | 5.0 | 4.7-5.3 |
| | | | | |
| Mn/Al Ring | Mn(III) oxide | 699 (19.82) | >10.0 | 10.0-20.0 |
| | | | | |
| Pt/Pd Hexalobe | Pt | 802 (22.73) | 0.0132 | 0.0044-0.0220 |
| | Pd | | 0.0264 | 0.0088-0.0440 |

### Experimental Procedure

Catalysts were evaluated using a standard fixed bed reactor. Reactor lining was constructed of Inconel alloy and bed dimensions were 10.16 cm (4") in diameter by 12.7 to 15.2 cm (5 to 6") in length. Concentrations were analyzed using a Rosemount Analytical model 400A hydrocarbon analyzer and a Thermo Environmental Instruments Inc. model 48 carbon monoxide analyzer.

Feed solvent was supplied by passing nitrogen through a stainless steel bomb-type saturator containing the desired solvent. For evaluation using test solvent and contamination solvent, two saturators were used in parallel. For carbon monoxide evaluation, CO was supplied from a gas cylinder of fixed concentration. Saturator(s) or CO cylinder were joined with the main catalyst flow derived from house air.

Test conditions were standardized to reflect relative field conditions. Catalysts were evaluated under ambient pressure at a space velocity of 10,000 hr⁻¹ using house air. Hydrocarbon test solvent concentration (i.e., methyl ethyl ketone (MEK) or toluene, as indicated) over the total flow was approximately 250 ppm on a C₁ basis. Inlet temperatures at which conversions were monitored ranged from between 300 to 550°C.

The effect of silicon contamination was evaluated either by introduction of an organosilicate compound, specifically hexamethyldisiloxane (HMDS), into the feed stream or by physical impregnation of the catalyst with a solution containing colloidal silicon dioxide. For organosilicate introduction into the feed stream, the concentration of the organosilicate over the total flow was 5 to 10 ppm as C₁. For physical impregnation, the amount of solution impregnated was calculated to give a catalyst comprised of 1 wt. % silicon dioxide after calcination. The amount of colloidal silicon dioxide solution utilized is dependent upon its silicon dioxide concentration, which varies between 30 to 35 wt. % calculated as silicon dioxide. For every 1000 grams of catalyst impregnated, the amount of colloidal silicon dioxide solution utilized was diluted to 200 grams with deionized water. After impregnation, the catalyst was dried at 110°C for 2 to 5 hours in a box furnace prior to calcination at 400°C for 1 to 3 hours. The calcination step is required to convert the colloidal silicon dioxide into the appropriate silicon dioxide form. After calcination the catalyst was replaced in the test reactor for evaluation.

Figures I and 2 illustrate MEK and toluene conversion of the aforementioned catalysts at a space velocity of 10,000 hr⁻¹ and a temperature of 400°C in the presence of 5 ppm of hexamethyl-disiloxane (HMDS) using amounts of 250 ppm of MEK and toluene, respectively.

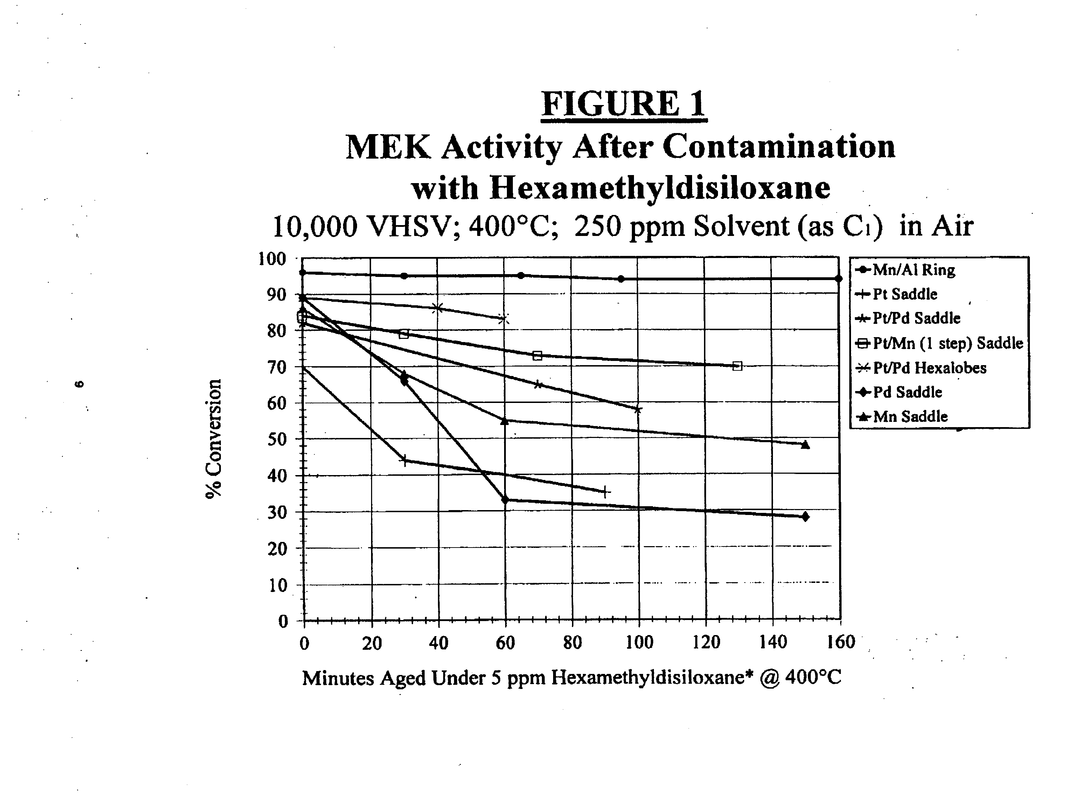

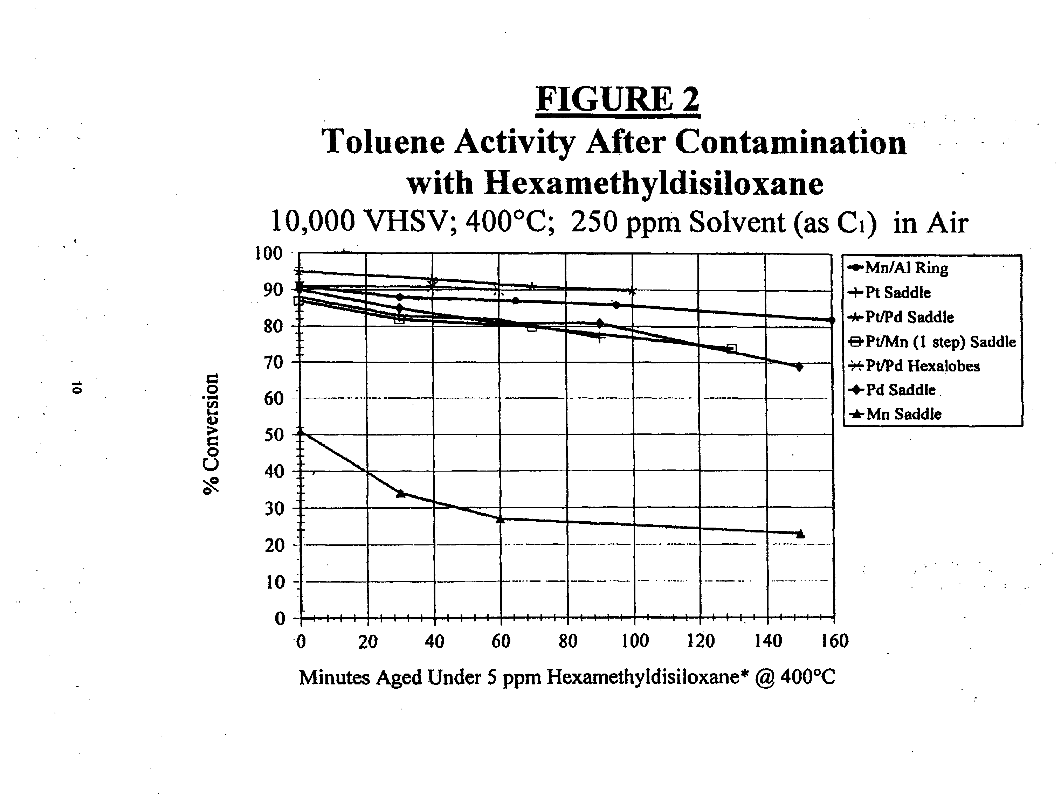

Reviewing the results of Figures 1 and 2, the best overall performance for MEK and toluene conversion is obtained with catalysts Mn/Al Ring, Pt/Pd Hexalobe, Mn/Pt Saddle and Pt/Pd Saddle. That is to say, that these catalysts were able to convert no lower than approximately 70% of the MEK and toluene, respectively except for the Pt/Pd Saddle catalyst which suffered from poorer MEK conversion (below 70% after about 50 minutes but still superior to performance of Pt Saddle, Pd Saddle and Mn Saddle catalysts). The Mn/Pt Saddle achieved no lower than approximately 70% MEK conversion and no lower than approximately 74% toluene conversion for 130 minutes.

Figures 1 and 2 show that the precious metal alone saddle catalysts (Pt Saddle, Pd Saddle) and the base metal alone saddle catalyst (Mn Saddle) give surprisingly inferior MEK conversions and initially or very quickly thereafter give MEK conversions below 70% in less than about 30 minutes for all these catalysts. While catalyst activity for foregoing precious metal alone and base metal alone saddle catalysts perform comparably with catalysts Mn/Al Ring, Pt/Pd Hexalobe and Mn/Pt Saddle for toluene conversion, the best results accounting for MEK conversion are only achieved with the Mn/Al Ring, Pt/Pd Hexalobe, Mn/Pt Saddle and Pt/Pd Saddle catalysts.

Thus the foregoing results support the superior overall performance of the catalysts employed in this invention when exposed to organosilicate poisons.

## Claims

1. A method for oxidising volatile organic compounds (VOC's) and/or carbon monoxide (CO) in the presence oforganosilicate compounds comprising the steps of:
(a) providing a gas stream comprising the VOC's and/or CO and organosilicate compounds; and
(b) contacting the gas stream with a catalytic effective amount of a composition comprising:
5 to 20 weight percent manganese oxide in the form of manganese II oxide or manganese III oxide,
0.001 to 0.100 weight percent precious metal or a precious metal combination, and
60 to 90 weight percent alumina in the form of a substrate comprising no less than 60 weight percent alumina and having supported thereon or therewithin the said manganese oxide and the said precious metal or precious metal combination.

2. The method of claim 1, wherein the alumina has a surface area of at least 10 m²/g.

3. The method of claim 2, wherein the alumina has a surface area in the range of 10 to 190 m²/g.

4. The method of claim 1, wherein the composition comprises 10 to 20 weight percent of the said manganese oxide and 80 to 90 weight percent of alumina.

5. The method of claim 1, wherein the precious metal comprises 0.004 to 0.06 weight percent of the catalyst.

6. The method of claim 1, wherein the alumina present in the composition is present in the form of bauxite.

7. The method of claim 3, wherein the precious metal is a combination of platinum and palladium.

8. The method of claim 7, wherein the composition comprises from 0.004 to 0.03 weight percent of platinum and 0.008 to 0.06 weight percent of palladium.

## Patentansprüche

1. Verfahren zum Oxidieren von flüchtigen organischen Verbindungen (VOCs) und/oder Kohlenmonoxid (CO) in Gegenwart von Organosilicatverbindungen, umfassend die Schritte:
a) Bereitstellen eines Gasstroms, umfassend die VOCs und/oder CO und Organosilicatverbindungen; und
b) in Kontakt bringen des Gasstroms mit einer katalytisch wirksamen Menge einer Zusammensetzung, umfassend:
5 bis 20 Gew.-% Manganoxid in Form von Mangan(II)-oxid oder Mangan(III)-oxid,
0,001 bis 0,100 Gew.-% Edelmetall oder einer Edelmetallkombination, und
60 bis 90 Gew.-% Aluminiumoxid in Form eines Substrates, das nicht weniger als 60 Gew.-% Aluminiumoxid umfasst und darauf oder darin geträgert das Manganoxid und das Edelmetall oder die Edelmetallkombination aufweist.

2. Verfahren nach Anspruch 1, wobei das Aluminiumoxid eine Oberfläche von wenigstens 10 m²/g aufweist.

3. Verfahren nach Anspruch 2, wobei das Aluminiumoxid eine Oberfläche im Bereich von 10 bis 190 m²/g aufweist.

4. Verfahren nach Anspruch 1, wobei die Zusammensetzung 10 bis 20 Gew.-% des Manganoxids und 80 bis 90 Gew.-% Aluminiumoxid umfasst.

5. Verfahren nach Anspruch 1, wobei das Edelmetall 0,004 bis 0,06 Gew.-% des Katalysators umfasst.

6. Verfahren nach Anspruch 1, wobei das in der Zusammensetzung vorhandene Aluminiumoxid in Form von Bauxit vorhanden ist.

7. Verfahren nach Anspruch 3, wobei das Edelmetall eine Kombination aus Platin und Palladium ist.

8. Verfahren nach Anspruch 7, wobei die Zusammensetzung 0,004 bis 0,03 Gew.-% Platin und 0,008 bis 0,06 Gew.-% Palladium umfasst.

## Revendications

1. Procédé d'oxydation de composés organiques volatiles (COV) et/ou de monoxyde de carbone (CO) en présence de composés organosilicates comprenant les étapes consistant à :
(a) fournir un flux gazeux comprenant les COV et/ou le CO et les composés organosilicates ; et
(b) mettre en contact le flux gazeux avec une quantité catalytique effective d'une composition comprenant :
5 à 20 pourcent en poids d'oxyde de manganèse sous la forme d'oxyde de manganèse II ou d'oxyde de manganèse III,
0,001 à 0,100 pourcent en poids de métal précieux ou d'une combinaison de métal précieux, et
60 à 90 pourcent en poids d'alumine sous la forme d'un substrat comprenant pas moins de 60 pourcent en poids d'alumine et supportant, au-dessus ou à l'intérieur, ledit oxyde de manganèse et ledit métal précieux ou ladite combinaison de métal précieux.

2. Procédé selon la revendication 1, dans lequel l'alumine présente une zone de surface d'au moins 10 m²/g.

3. Procédé selon la revendication 2, dans lequel l'alumine présente une zone de surface comprise entre 10 et 190 m²/g.

4. Procédé selon la revendication 1, dans lequel la composition comprend entre 10 et 20 pourcent en poids dudit oxyde de manganèse et 80 à 90 pourcent en poids d'alumine.

5. Procédé selon la revendication 1, dans lequel le métal précieux comprend de 0,004 à 0,06 pourcent en poids de catalyseur.

6. Procédé selon la revendication 1, dans lequel l'alumine présente dans la composition est présente sous la forme de bauxite.

7. Procédé selon la revendication 3, dans lequel le métal précieux est une combinaison de platine et de palladium.

8. Procédé selon la revendication 7, dans lequel la composition comprend entre 0,004 et 0,03 pourcent en poids de platine et entre 0,008 et 0,06 pourcent en poids de palladium.
